# EUROPÄISCHE PATENTSCHRIFT

(11) **EP 2 932 125 B1**
(45) Veröffentlichungstag und Bekanntmachung des Hinweises auf die Patenterteilung: **03.07.2019**
(21) Anmeldenummer: 13821438.2
(22) Anmeldetag: 11.12.2013
(51) Int. Cl.: F16D 13/68

(54) **ABSTÜTZSCHEIBE FÜR EINE LAMELLENKUPPLUNG UND LAMELLENKUPPLUNG**
SUPPORT DISC FOR A MULTI-PLATE CLUTCH AND MULTI-PLATE CLUTCH
DISQUE DE SUPPORT POUR EMBRAYAGE À DISQUES ET EMBRAYAGE À DISQUES

(30) Priorität: 14.12.2012 DE 102012223255
(43) Veröffentlichungstag der Anmeldung: 21.10.2015
(73) Patentinhaber: Schaeffler Technologies AG & Co. KG, 91074 Herzogenaurach (DE)
(72) Erfinder: GRUMER, Friederike, 77855 Achern (DE); RABER, Christoph, 66564 Ottweiler-Steinbach (DE); DECKER, Florian, 77815 Bühl (DE); VYGEN, Florian, 77866 Rheinau (DE); RICHWIN, Stefan, 77815 Bühl (DE); CASTRO, Claudio, Fernandes, 18035-002 Sorocaba - SP Brazil (BR); WAIDELICH, Heike, 77830 Bühlertal (DE); SPERBER, Matthias, 96193 Wachenroth (DE)
(86) Internationale Anmeldenummer: PCT/DE2013/200346
(87) Internationale Veröffentlichungsnummer: WO 2014/090250

(56) Entgegenhaltungen:
- EP-A2- 0 639 415
- EP-A2- 1 983 207
- WO-A1-2007/073710
- WO-A1-2013/000455
- DE-A1-102009 045 980
- DE-A1-102010 048 829
- DE-A1-102010 050 463

## Beschreibung

Die Erfindung betrifft eine Abstützscheibe für eine Lamellenkupplung und eine Lamellenkupplung, insbesondere für ein Kraftfahrzeug, besonders bevorzugt für ein Motorrad.

Im Stand der Technik, beispielsweise aus DE 10 2010 050463 A1 und DE 10 2009 045980 A1 sind verschiedene Lamellenkupplungen bekannt, um ein Drehmoment lösbar zu übertragen. Hierzu sind eine Mehrzahl von Lamellen vorgesehen, die mit jeweiligen Reibflächen über einen Einrückmechanismus miteinander verpresst werden und somit infolge der Reibkraft ein Drehmoment übertragen können. Dazu lassen sich die Lamellen in innenseitige Lamellen und außenseitige Lamellen unterteilen, wobei die außenseitigen Lamellen mit einem Außenkorb verbunden sind und die innenseitigen Lamellen mit einem Innenkorb. Werden die Lamellen miteinander verpresst, so wird der Innenkorb beziehungsweise der Außenkorb durch den jeweils anderen Korb in Rotation versetzt. Es gibt Lamellenkupplungen, die im Normalzustand geschaltet sind und Lamellenkupplungen, die im Normalzustand gelöst sind. Zur Erzeugung der jeweils notwendigen Kraft ist dazu eine Tellerfeder vorgesehen. Die bekannten Lamellenkupplungen sind sehr komplex und umfassen eine Vielzahl von einzelnen Teilen, wodurch die Herstellungskosten für viele Anwendungen zu hoch sind. Ferner ist aus der DE 10 2010 050463 A1 eine gattungsgemäße Abstützscheibe bekannt.

Hiervon ausgehend liegt der vorliegenden Erfindung die Aufgabe zugrunde, die aus dem Stand der Technik bekannten Nachteile zumindest teilweise zu überwinden. Die Aufgabe wird durch die Merkmale des unabhängigen Patentanspruchs 1 gelöst. Vorteilhafte Weiterbildungen sind Gegenstand der abhängigen Patentansprüche.

Die Erfindung betrifft einen Innenkorb für eine Lamellenkupplung, welche eine erste Aufnahme für Reiblamellen, eine zweite Aufnahme für eine Abstützscheibe, eine dritte Aufnahme für eine Wellennabe und ein Auflager für eine Tellerfeder aufweist.

Der Innenkorb ist dafür vorgesehen, die Reiblamellen in einer Lamellenkupplung aufzunehmen, welche zwischen den Reiblamellen des Außenkorbs der Lamellenkupplung angeordnet sind. Hierzu ist eine erste Aufnahme an dem Innenkorb vorgesehen. Diese erste Aufnahme kann zum Beispiel durch einen Stift, eine korrespondierende Verzahnung oder ähnliche Einrichtung umgesetzt sein. Weiterhin umfasst der Innenkorb eine Auflage für eine Tellerfeder, so dass der Innenkorb ein Widerlager für die Tellerfeder bildet. Des Weiteren umfasst der Innenkorb eine dritte Aufnahme für eine Wellennabe, über die zum Beispiel eine Ausgangswelle einer Lamellenkupplung anbindbar ist. Diese dritte Aufnahme kann ebenfalls durch eine korrespondierende Verzahnung und/oder Verstiftung gebildet sein. Besonders vorteilhafter Weise weist die entsprechende Wellennabe nur einen einfachen Anschluss für die dritte Aufnahme auf, so dass die Wellennabe sehr einfach und kostengünstig zu fertigen ist. Außerdem umfasst der Innenkorb noch eine zweite Aufnahme für eine Abstützscheibe, wobei die Abstützscheibe dazu eingerichtet ist, eine Vorspannung in die Tellerfeder einzubringen, die insbesondere die Setzungserscheinungen in der Tellerfeder über die Lebensdauer der Lamellenkupplung ausgleicht. Der hier vorgeschlagene Innenkorb hat den Vorteil, dass er zu vielen Funktionselementen der Lamellenkupplung eine Anbindung beziehungsweise eine Aufnahme bildet, so dass nur eine reduzierte Anzahl von Teilen benötigt wird.

Gemäß einer weiteren vorteilhaften Ausführungsform des Innenkorbs ist der Innenkorb durch Tiefziehen gefertigt.

Der Innenkorb mit den Funktionen gemäß der obigen Beschreibung kann aus einem Blech gefertigt werden, welches durch Tiefziehen umgeformt werden kann. Hierdurch werden sehr hohe Festigkeiten erreicht und es können die verschiedenen Elemente des Innenkorbs in einem Fertigungsschritt beziehungsweise in einem Fertigungsverfahren gefertigt werden. Hierdurch werden die Kosten der Herstellung eines solchen Innenkorbs drastisch reduziert.

Gemäß einer weiteren vorteilhaften Ausführungsform des Innenkorbs umfasst zweite Aufnahme eine Verliersicherung für die Abstützscheibe.

Gemäß dieser vorteilhaften Ausführungsform des Innenkorbs wird die Abstützscheibe, welche im Betrieb der Lamellenkupplung unterschiedlichen relativen Drehbewegungen unterliegen kann, durch die zweite Aufnahme vorm Verlieren gesichert. Bspw. ist die zweite Aufnahme durch Laschen gebildet, welche Einbuchtungen umfasst, in die ein Stift einer solcher Abstützscheibe eingeführt werden kann. Eine benachbarte Lasche bildet dann zusammen mit einer Feder der Abstützscheibe einen Anschlag, der die Abstützscheibe rotatorisch sichert und durch die Einbuchtung ist die Abstützscheibe zugleich axial gesichert. Unter Umständen kann die zweite Aufnahme und/oder die Abstützscheibe nach dem Einsetzen in die zweite Aufnahme noch durch Umformverfahren gesichert beziehungsweise fixiert werden.

Gemäß einer weiteren vorteilhaften Ausführungsform des Innenkorbs ist die erste Aufnahme mit nur einer Reiblamelle in Kontakt bringbar.

Gemäß dieser Ausführungsform sind nicht alle Reiblamellen mit dem Innenkorb verbunden, die innenkorbseitig angeordnet sind. Vielmehr ist nur eine der Reiblamellen mit dem Innenkorb in Kontakt und überträgt so ein Drehmoment auf den Innenkorb. Die benachbarten innenkorbseitigen Reiblamellen übertragen hingegen das Drehmoment auf die Reiblamelle über einstückig mit den Reiblamellen gebildeten Verbindungselementen. Besonders bevorzugt können dabei die Reiblamellen alle gleicher Bauart sein. Dadurch wird die Größe der ersten Aufnahme verringert und somit die Anforderung der hohen Passgenauigkeit auf einen kleineren Bereich reduziert.

Gemäß einer weiteren vorteilhaften Ausführungsform des Innenkorbs ist die Wellennabe axial verstemmbar und insbesondere über eine Innenverzahnung der dritten Aufnahme rotatorisch fixierbar.

Das Verstemmen von Bauteilen ist ein besonders günstiges Fertigungsverfahren, mit dem eine gute Verbindung erreicht wird, die eine lange Lebensdauer aufweist. Zudem hat dies den Vorteil, dass keine weiteren Verbindungselemente benötigt werden. Besonders bevorzugt ist dabei die Wellennabe über eine Innenverzahnung der dritten Aufnahme mit einer korrespondierenden Verzahnung an der Wellennabe rotatorisch fixiert, so dass eine axiale Verstemmung der Wellennabe mit der dritten Aufnahme beziehungsweise dem Innenkorb die Wellennabe ausreichend fixiert. Das Verstemmen kann dabei gleichzeitig beim Zentrieren des Innenkorbs mit der Wellennabe vorgenommen werden.

Gemäß der Erfindung wird eine Abstützscheibe für eine Lamellenkupplung vorgeschlagen, welche eine Mehrzahl von Federelementen zum Vorspannen einer Tellerfeder, zumindest einen Sicherungsstift zum Sichern der Abstützscheibe gegen Verlieren und eine Stützaufnahme für ein Einrückradiallager aufweist.

Die hier vorgeschlagene Abstützscheibe ist insbesondere für eine Lamellenkupplung mit einem Innenkorb gemäß der obigen Beschreibung geeignet. Die Abstützscheibe weist eine Mehrzahl von Federelementen auf, die eine Kraft auf die Tellerfeder ausüben, so dass diese in geeigneter Weise vorgespannt ist. Zur Fixierung der Abstützscheibe ist zumindest ein Sicherungsstift, besonders bevorzugt eine mit der Anzahl der Federelemente korrespondierenden Anzahl an Sicherungsstiften, versehen, die zum Beispiel in einer Einbuchtung in der zweiten Aufnahme des Innenkorbs eingebracht werden können. Weiterhin umfasst die Abstützscheibe eine Stützaufnahme für ein Einrückradiallager, in welches ein nicht rotierender oder mit einer anderen Geschwindigkeit rotierender Einrückmechanismus einführbar ist, welcher über das Einrückradiallager, besonders bevorzugt direkt, auf die Tellerfeder wirkt. In der besonders bevorzugten Ausführungsform der Abstützscheibe wirkt das Einrückradiallager mit dem in der Stützaufnahme aufgenommenen Außenring ohne Zwischenbauteil auf die Tellerfeder, so dass die Anpressung gelöst wird beziehungsweise die Lamellen gegeneinander verpresst werden. Eine solche Abstützscheibe umfasst mehrere Funktionen und reduziert somit ebenfalls die Anzahl an notwendigen Bauteilen und reduziert die Anzahl an Fertigungsschritten. Insbesondere kann die Abstützscheibe aus einem Blech gefertigt werden beziehungsweise aus einer Platine gestanzt oder lasergeschnitten werden, wodurch die Fertigungskosten sehr gering sind.

Gemäß einer weiteren vorteilhaften Ausführungsform der Abstützscheibe bildet die Abstützscheibe zumindest eine Erhebung als Widerlager für eine Tellerfeder aus, wobei bevorzugt die Abstützscheibe durch Blechumformen gebildet ist.

Die Erhebung kann zum Beispiel durch ein Umformverfahren erzeugt werden, wobei ein geschlossener Ring oder eine Aneinanderreihung von Ausbuchtungen in Ringform entstehen, die das Widerlager für eine Tellerfeder ausbilden, so dass auf den im Stand der Technik üblichen Drahtring verzichtet werden kann. Besonders bevorzugt wird die Erhebung durch Umbiegen der Enden der Sicherungsstifte erzeugt, wodurch zugleich die Verliersicherung unterstützt wird. Bevorzugt wird die gesamte Abstützscheibe durch Blechumformen gebildet, so dass die zumindest eine Erhebung in einem Fertigungsschritt erzeugt werden kann.

Gemäß einem weiteren Aspekt der Erfindung wird eine Lamellenkupplung zum lösbaren Verbinden einer Abtriebswelle mit einem Antriebsstrang vorgeschlagen, welche einen Außenkorb, in dem außenseitige Reiblamellen anordbar sind, eine Tellerfeder und einen Innenkorb nach der obigen Beschreibung aufweist, wobei insbesondere die innenkorbseitigen Reiblamellen miteinander verbindbar sind und gegen den Innenkorb radial abstützbar sind, und besonders bevorzugt nur eine der Reiblamellen mit dem Innenkorb in Kontakt bringbar ist und ein Drehmoment der benachbarten Reiblamellen auf den Innenkorb allein über die eine Reiblamelle übertragbar ist.

Die Lamellenkupplung ist nach oben bezeichneter Art zum lösbaren Verbinden einer Abtriebswelle mit einem Antriebsstrang eingerichtet, so dass ein Drehmoment von der Abtriebswelle auf den Antriebsstrang oder in umgekehrter Richtung übertragbar ist, zum Beispiel beim Schleppbetrieb eines Kraftfahrzeugs. Dazu weist die Lamellenkupplung einen Außenkorb auf, an dem außenseitige Reiblamellen anordbar sind, zum Beispiel durch eine korrespondierende Verzahnung rotatorisch gesichert sind. Weiterhin umfasst die Lamellenkupplung eine Tellerfeder, welche die Reiblamellen gegeneinander verpresst und einen Innenkorb gemäß der obigen Beschreibung. In dem Innenkorb sind innenkorbseitige Reiblamellen angeordnet, welche wechselseitig mit den außenseitigen Reiblamellen in der Lamellenkupplung angeordnet sind. Die innenkorbseitigen Reiblamellen sind insbesondere miteinander verbindbar, so dass ein Drehmoment von einer Reiblamelle auf die benachbarte Reiblamelle mittels der Verbindung übertragbar ist und nur eine der Reiblamellen mit dem Innenkorb in Kontakt bringbar ist. Diese eine Reiblamelle überträgt das Drehmoment aller innkorbseitigen Reiblamellen auf den Innenkorb. Bevorzugter Weise werden die Reiblamellen, welche eine axiale Relativbewegung zum Innenkorb beschreiben können müssen, eine Abstützung gegen eine Wand des Innenkorbs, so dass ein Verkippen der Reiblamellen unterbunden wird. Die hier vorgeschlagene Lamellenkupplung weist besonders wenig einzelne Bauteile auf, wobei die einzelnen Bauteile insbesondere der Innenkorb eine Vielzahl an Funktionen integral ausüben.

Gemäß einer weiteren vorteilhaften Ausführungsform der Lamellenkupplung umfasst die Lamellenkupplung weiterhin ein Einrückradiallager und eine Abstützscheibe nach der obigen Beschreibung, wobei insbesondere mittels der Abstützscheibe die Tellerfeder über den Außenring des Einrückradiallagers axial abstützbar ist.

Die Lamellenkupplung mit einer Abstützscheibe gemäß der obigen Beschreibung weist eine verminderte Anzahl an Bauteilen auf, insbesondere wird ein zusätzlicher Drahtring eingespart, wodurch nicht nur die Anzahl der Teile reduziert wird, sondern auch der Montageaufwand erheblich reduziert wird. Durch die Verwendung des Einrückradiallagers als direktes Kontaktelement zur Tellerfeder, nämlich über den Außenring des Einrückradiallagers, wird ebenfalls nicht nur ein Bauteil eingespart, sondern die Anzahl an Passungen reduziert. Hierdurch kann die Genauigkeit der Lamellenkupplung erhöht werden.

Gemäß einem weiteren Aspekt der Erfindung wird ein Kraftfahrzeug, insbesondere ein Motorrad, vorgeschlagen, welches eine Antriebseinheit mit einer Abtriebswelle, einen Antriebsstrang und eine Lamellenkupplung nach der obigen Beschreibung zum lösbaren Verbinden der Abtriebswelle mit dem Antriebsstrang aufweist, wobei insbesondere die Lamellenkupplung von Hand betätigbar ist.

Mit einem Motorrad ist ein Zweirad, Dreirad oder Quad oder vergleichbares bezeichnet, welches durch eine Antriebseinheit, wie zum Beispiel eine Verbrennungskraftmaschine oder einen Elektromotor, angetrieben wird. Bei einem Zweirad zum Beispiel besteht der Antriebsstrang aus einem Schaltgetriebe und einem Kettentrieb oder Riementrieb, welcher zum Beispiel das Hinterrad des Zweirads antreibt. Die Abtriebswelle, welche das Drehmoment der Antriebseinheit abgibt, ist über die Reibkupplung lösbar mit dem Antriebsstrang verbunden. Bei vielen Motorrädern, insbesondere für den asiatischen Markt, ist der Kostendruck sehr hoch. Daher müssen Komponenten eingesetzt werden, die einerseits eine lange Lebensdauer und Verlässlichkeit aufweisen zugleich aber auch mit geringen Fertigungskosten hergestellt werden können. Die hier vorgeschlagene Lamellenkupplung ist daher für solche Einsatzzwecke besonders geeignet. Zugleich wird die Anzahl der Bauteile und unter Umständen die Masse der Reibkupplung gegenüber bekannten Reibkupplungen reduziert.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Es zeigen:
- Fig. 1:: einen Innenkorb;
- Fig. 2:: eine Abstützscheibe;
- Fig. 3:: eine Lamellenkupplung mit Innenkorb und Abstützscheibe; und
- Fig. 4:: ein Kraftfahrzeug mit Lamellenkupplung.

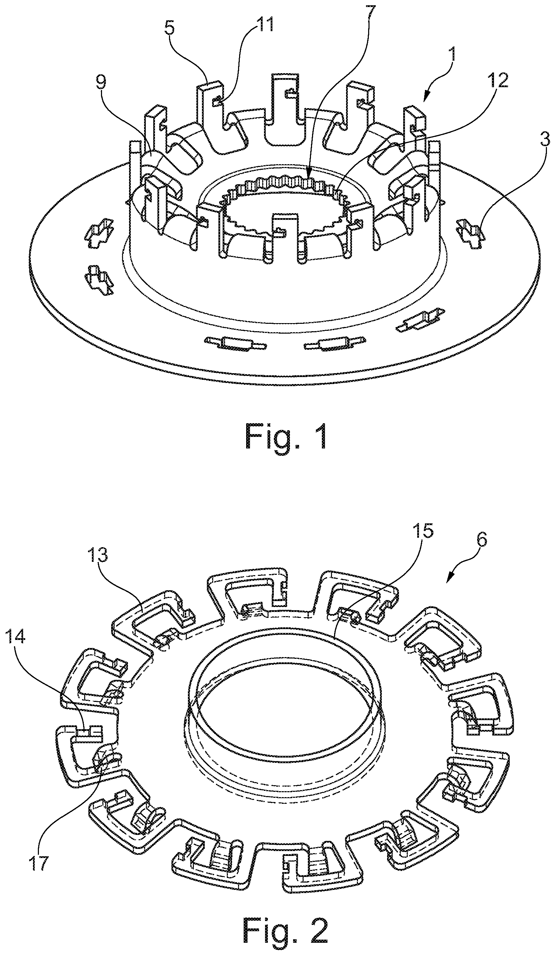

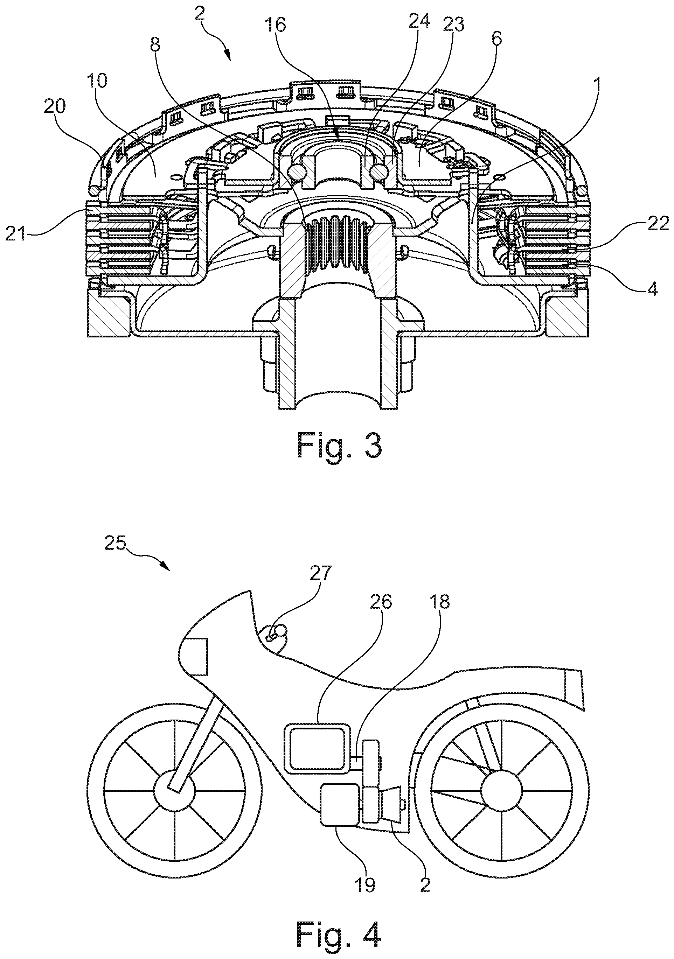

Fig. 1 zeigt einen Innenkorb 1, der aus einem Blechteil tiefgezogen ist. Er weist eine erste Aufnahme 3 für eine Reiblamelle 4, eine zweite Aufnahme 5 für eine Abstützscheibe 6, eine dritte Aufnahme 7 für eine Wellennabe 8 und ein Auflager 9 für eine Tellerfeder 10 auf. Die jeweiligen Elemente sind in Fig. 3 dargestellt. Die zweite Aufnahme 5 umfasst eine Verliersicherung 11, in die ein Sicherungsstift 14 (siehe Fig. 2) einführbar ist. Die dritte Aufnahme 7 umfasst eine Innenverzahnung 12, mit der eine Wellennabe 8 axial verstemmbar ist.

In Fig. 2 ist eine Abstützscheibe 6 gezeigt, die ein Federelement 13, einen Sicherungsstift 14 und eine Stützaufnahme 15 für ein Einrückradiallager 16 bildet. Die Abstützscheibe 6 ist ebenfalls aus einem Blechteil umgeformt. Der Sicherungsstift 14 bildet eine Erhebung 17 aus, die ein Widerlager für eine Tellerfeder 10 bildet. Auch diese Elemente sind in Fig. 3 dargestellt.

In Fig. 3 ist eine Lamellenkupplung 2 gezeigt, in der ein Innenkorb 1 und eine Abstützscheibe 6 wie in den Figuren 1 und 2 gezeigt angeordnet ist. Ein Außenkorb 20 nimmt außenseitige Reiblamellen 21 auf, die sich mit innenkorbseitigen Reiblamellen 4 beziehungsweise 22 abwechseln. Die innenkorbseitige Reiblamelle 4 ist in der ersten Aufnahme 3 des Innenkorbs 1 aufgenommen und überträgt ein Drehmoment von benachbarten Reiblamellen 22 auf den Innenkorb 1. Die innenkorbseitigen Reiblamellen 4 beziehungsweise 22 sind gegen den Innenkorb gegen Verkippen abgestützt. In der zweiten Aufnahme 5 ist die Abstützscheibe 6 aufgenommen, die eine in dem Auflager 9 des Innenkorbs 1 gelagerte Tellerfeder 10 mittels der Federelemente 13 vorspannt und mittels der Erhebungen 17 (hier nicht sichtbar) ein Widerlager für die Tellerfeder 10 bildet. Zudem nimmt die Abstützscheibe 6 mit der Stützaufnahme 15 ein Einrückradiallager 16 mit einem Außenring 23 und einem Innenring 24 auf, wobei der Innenring 24 dazu eingerichtet ist unmittelbar auf die Tellerfeder 10 zu wirken. In der dritten Aufnahme 7 ist eine Wellennabe 8 aufgenommen, die die Lamellenkupplung 2 mit einem Antriebsstrang 19 (nicht dargestellt) verbindet.

In Fig. 4 ist ein Kraftfahrzeug 25 als Motorrad dargestellt, das eine Antriebseinheit 26 umfasst. Die Antriebseinheit 26 ist über ihre Abtriebswelle 18 mittels einer Lamellenkupplung 2 mit einem Antriebsstrang 19 verbindbar, wobei der Antriebsstrang 19 hier nur als Schaltgetriebe dargestellt ist. Die Lamellenkupplung ist über einen Handhebel 27 betätigbar.

Mit der hier vorgeschlagenen Lamellenkupplung mit dem Innenkorb und dem Abstützring kann eine kostengünstig herstellbare und effiziente Lamellenkupplung bereitgestellt werden, die bevorzugt in einem Motorrad einsetzbar ist.

### Bezugszeichenliste

- 1: Innenkorb
- 2: Lamellenkupplung
- 3: erste Aufnahme
- 4: innenkorbseitige Reiblamelle
- 5: zweite Aufnahme
- 6: Abstützscheibe
- 7: dritte Aufnahme
- 8: Wellennabe
- 9: Auflager
- 10: Tellerfeder
- 11: Verliersicherung
- 12: Innenverzahnung
- 13: Federelement
- 14: Sicherungsstift
- 15: Stützaufnahme
- 16: Einrückradiallager
- 17: Erhebung
- 18: Abtriebswelle
- 19: Antriebsstrang
- 20: Außenkorb
- 21: außenseitige Reiblamellen
- 22: benachbarte Reiblamellen
- 23: Außenring
- 24: Innenring
- 25: Kraftfahrzeug
- 26: Antriebseinheit
- 27: Handhebel

## Patentansprüche

1. Abstützscheibe (6) für eine Lamellenkupplung (2), aufweisend eine Stützaufnahme (15) für ein Einrückradiallager (16), **dadurch gekennzeichnet, dass** eine Mehrzahl von Federelementen (13) zum Vorspannen einer Tellerfeder (10) und zumindest einen Sicherungsstift (14) zum Sichern der Abstützscheibe (6) gegen Verlieren vorgesehen sind.

2. Abstützscheibe (6) nach Anspruch 1, wobei die Abstützscheibe (6) zumindest eine Erhebung (17) als Widerlager für die Tellerfeder (10) ausbildet, wobei bevorzugt die Abstützscheibe (6) durch Blechumformen gebildet ist.

3. Lamellenkupplung (2) zum lösbaren Verbinden einer Abtriebswelle (18) mit einem Antriebsstrang (19), aufweisend einen Außenkorb (20), in dem außenseitige Reiblamellen (21) anordbar sind, eine Tellerfeder (10), und einen Innenkorb (1), aufweisend eine erste Aufnahme (3) für Reiblamellen (4), **dadurch gekennzeichnet, dass** eine Abstützscheibe (6) nach Anspruch 1 oder 2 vorgesehen ist und der Innenkorb (1) eine zweite Aufnahme (5) für die Abstützscheibe (6), eine dritte Aufnahme (7) für eine Wellennabe (8) und ein Auflager (9) für die Tellerfeder (10) aufweist, wobei die Abstützscheibe dazu eingerichtet ist, eine Vorspannung in die Tellerfeder einzubringen.

4. Lamellenkupplung (2) nach Anspruch 3, wobei der Innenkorb (1) durch Tiefziehen gefertigt ist.

5. Lamellenkupplung (2) nach Anspruch 3 oder 4, wobei die zweite Aufnahme (5) eine Verliersicherung (11) für die Abstützscheibe (6) umfasst.

6. Lamellenkupplung (2) nach einem der Ansprüche 3-5, wobei die erste Aufnahme (3) mit nur einer Reiblamelle (4) in Kontakt bringbar ist.

7. Lamellenkupplung (2) nach einem der Ansprüche 3-6, wobei die Wellennabe (8) axial verstemmbar ist, und insbesondere über eine Innenverzahnung (12) der dritten Aufnahme (7) rotatorisch fixierbar ist.

8. Lamellenkupplung (2) nach einem der Ansprüche 3-7, wobei die innenkorbseitigen Reiblamellen (4) miteinander verbindbar sind und gegen den Innenkorb (1) radial abstützbar sind.

9. Lamellenkupplung (2) nach Anspruch 8, wobei nur eine der innenkorbseitigen Reiblamellen (4) mit dem Innenkorb (1) in Kontakt bringbar ist und ein Drehmoment der benachbarten Reiblamellen (22) auf den Innenkorb (1) allein über die eine Reiblamelle (4) übertragbar ist.

10. Lamellenkupplung (2) nach einem der der Ansprüche 3-9, wobei mittels der Abstützscheibe (6) die Tellerfeder (10) über den Außenring (23) des Einrückradiallagers (16) axial abstützbar ist.

11. Kraftfahrzeug (25), insbesondere ein Motorrad, aufweisend eine Antriebseinheit (26) mit einer Abtriebswelle (18), einen Antriebsstrang (19) und eine Lamellenkupplung (2) nach einem der Ansprüche 3-10 zum lösbaren Verbinden der Abtriebswelle (18) mit dem Antriebsstrang (19), wobei bevorzugt die Lamellenkupplung (2) von Hand betätigbar ist.

## Claims

1. Supporting disc (6) for a multiple disc clutch (2), having a supporting seat (15) for a radial engagement bearing (16), **characterized in that** a plurality of spring elements (13) for prestressing a cup spring (10) and at least one securing pin (14) for securing the supporting disc (6) against loss are provided.

2. Supporting disc (6) according to Claim 1, the supporting disc (6) configuring at least one elevation (17) as an abutment for the cup spring (10), the supporting disc (6) preferably being formed by way of sheet metal forming.

3. Multiple disc clutch (2) for releasably connecting a drive shaft (18) to a drive train (19), having an outer basket (20), in which outer-side friction discs (21) can be arranged, a cup spring (10) and an inner basket (1), having a first receptacle (3) for friction discs (4), **characterized in that** a supporting disc (6) according to Claim 1 or 2 is provided, and the inner basket (1) has a second receptacle (5) for the supporting disc (6), a third receptacle (7) for a shaft hub (8), and a support (9) for the cup spring (10), the supporting disc being set up to introduce a prestress into the cup spring.

4. Multiple disc clutch (2) according to Claim 3, the inner basket (1) being manufactured by way of deep drawing.

5. Multiple disc clutch (2) according to Claim 3 or 4, the second receptacle (5) comprising a captive securing means (11) for the supporting disc (6).

6. Multiple disc clutch (2) according to one of Claims 3 to 5, it being possible for the first receptacle (3) to be brought into contact with only one friction disc (4) .

7. Multiple disc clutch (2) according to one of Claims 3 to 6, it being possible for the shaft hub (8) to be caulked axially and, in particular, to be fixed rotationally via an internal spline system (12) of the third receptacle (7).

8. Multiple disc clutch (2) according to one of Claims 3 to 7, it being possible for the inner basket-side friction discs (4) to be connected to one another and to be supported radially against the inner basket (1).

9. Multiple disc clutch (2) according to Claim 8, it being possible for only one of the inner basket-side friction discs (4) to be brought into contact with the inner basket (1), and it being possible for a torque of the adjoining friction discs (22) to be transmitted to the inner basket (1) solely via the one friction disc (4) .

10. Multiple disc clutch (2) according to one of Claims 3 to 9, it being possible for the cup spring (10) to be supported axially by means of the supporting disc (6) via the outer ring (23) of the radial engagement bearing (16) .

11. Motor vehicle (25), in particular a motorcycle, having a drive unit (26) with an output shaft (18), a drive train (19) and a multiple disc clutch (2) according to one of Claims 3 to 10 for releasably connecting the output shaft (18) to the drive train (19), it preferably being possible for the multiple disc clutch (2) to be actuated by hand.

## Revendications

1. Disque de support (6) pour un embrayage à disques (2), présentant un logement de support (15) pour un palier radial d'embrayage (16), **caractérisé en ce qu'**il est prévu une multiplicité d'éléments de ressort (13) pour la précontrainte d'une rondelle élastique (10) et au moins une tige de fixation (14) pour assurer le disque de support (6) contre la perte.

2. Disque de support (6) selon la revendication 1, dans lequel le disque de support (6) forme au moins une surélévation (17) comme appui pour la rondelle élastique (10), dans lequel le disque de support (6) est de préférence formé par déformation de tôle.

3. Embrayage à disques (2) pour la liaison séparable d'un arbre de sortie (18) avec une chaîne cinématique (19), présentant un panier extérieur (20), dans lequel des disques de friction externes (21) peuvent être disposés, une rondelle élastique (10), et un panier intérieur (1), présentant un premier logement (3) pour des disques de friction (4), **caractérisé en ce qu'**il est prévu un disque de support (6) selon une revendication 1 ou 2 et le panier intérieur (1) présente un deuxième logement (5) pour le disque de support (6), un troisième logement (7) pour un moyeu d'arbre (8) et un appui (9) pour la rondelle élastique (10), dans lequel le disque de support est conçu pour produire une précontrainte dans la rondelle élastique.

4. Embrayage à disques (2) selon la revendication 3, dans lequel le panier intérieur (1) est fabriqué par emboutissage profond.

5. Embrayage à disques (2) selon une revendication 3 ou 4, dans lequel le deuxième logement (5) comprend une sécurité contre la perte (11) pour le disque de support (6) .

6. Embrayage à disques (2) selon l'une quelconque des revendications 3 à 5, dans lequel le premier logement (3) ne peut être mis en contact qu'avec un disque de friction (4) .

7. Embrayage à disques (2) selon l'une quelconque des revendications 3 à 6, dans lequel le moyeu d'arbre (8) peut être maté axialement, et en particulier peut être fixé en rotation par une denture intérieure (12) du troisième logement (7).

8. Embrayage à disques (2) selon l'une quelconque des revendications 3 à 7, dans lequel les disques de friction (4) du côté du panier intérieur peuvent être assemblés les uns aux autres et être supportés radialement contre le panier intérieur (1).

9. Embrayage à disques (2) selon la revendication 8, dans lequel seul un des disques de friction (4) du côté du panier intérieur peut être mis en contact avec le panier intérieur (1) et un couple de rotation des disques de friction voisins (22) ne peut être transmis au panier intérieur (1) que par ledit un disque de friction (4).

10. Embrayage à friction (2) selon l'une quelconque des revendications 3 à 9, dans lequel la rondelle élastique (10) peut être supportée axialement au moyen du disque de support (6) par la bague extérieure (23) du palier radial d'embrayage (16).

11. Véhicule à moteur (25), en particulier motocyclette, présentant une unité d'entraînement (26) avec un arbre de sortie (18), une chaîne cinématique (19) et un embrayage à disques (2) selon l'une quelconque des revendications 3 à 10 pour la liaison séparable de l'arbre de sortie (18) avec la chaîne cinématique (19), dans lequel l'embrayage à disques (2) est de préférence actionnable à la main.
